# EUROPÄISCHE PATENTSCHRIFT

(11) **EP 1 920 850 B1**
(45) Veröffentlichungstag und Bekanntmachung des Hinweises auf die Patenterteilung: **15.12.2010**
(21) Anmeldenummer: 07019871.8
(22) Anmeldetag: 11.10.2007
(51) Int. Cl.: B05D 5/06, B05D 3/02, B05D 7/16, B05D 7/14, B05D 7/26, B05B 15/08

(54) **Verfahren zum Schutz von patinierten Oberflächen von Kupferprodukten sowie patiniertes Kupferprodukt**
Method for protecting patinated surfaces of copper products and patinated copper product
Procédé de protection de surfaces patinées de produits en cuivre ainsi que produit en cuivre patiné

(30) Priorität: 09.11.2006 DE 102006053192
(43) Veröffentlichungstag der Anmeldung: 14.05.2008
(73) Patentinhaber: KME Germany AG & Co. KG, 49074 Osnabrück (DE)
(72) Erfinder: Hoveling, Stefan, 49078 Osnabrück (DE)
(74) Vertreter: Pietrzykowski, Anja

(56) Entgegenhaltungen:
- EP-A- 0 769 569
- WO-A-95/29207
- DE-C1- 19 530 836
- GB-A- 1 380 096
- DATABASE WPI Week 197930 Thomson Scientific, London, GB; AN 1979-55527B XP002503498 & JP 54 076447 A (MATSUSHITA ELECTRIC WORKS LTD) 19. Juni 1979 (1979-06-19)

## Beschreibung

Die Erfindung betrifft ein Verfahren zum Schutz von patinierten Oberflächen von Kupferprodukten sowie ein Kupferprodukt mit einer patinierten Oberfläche.

Für die Dach- und Fassadenbekleidung sowie für die Dachentwässerung ist es bekannt, in speziell entwickelten mechanisch-chemisch-thermischen Verfahren Kupfertafeln industriell zu patinieren. Bei diesem Verfahren wird eine Oxidschicht aus dem Kupfer heraus erzeugt. Das ist ein Prozess, wie er auch bei der natürlichen Patinabildung infolge atmosphärischer Einflüsse über lange Zeiträume abläuft. Die industrielle Bewitterung der Kupfertafeln verkürzt die Wartezeit, bis eine geneigte Oberfläche unter freier Witterung in der Endphase natürlich grün wird. Dächer, Fassaden und Dachentwässerungen haben dadurch von Anfang an eine grüne Patina, die nur auf Kupfer entsteht. Der gesamte Bewitterungsprozess ist schwer beherrschbar, da sich fertigungstechnisch Farbschwankungen zwischen einzelnen Kupfertafeln ergeben können. Die Farbpalette reicht von lindgrün bis blaugrün, so dass letztlich jedes patinierte Kupferprodukt ein Unikat ist. Durch die Freibewitterung ist die Patina einer ständigen Weiterentwicklung unterworfen, die letztlich zur Anpassung von Farbunterschieden, aber auch zu farblichen Änderungen führen kann, was die Natürlichkeit der Oberfläche unterstreicht.

Bei den unterschiedlichen Kupferprodukten ergeben sich allerdings häufig Probleme im optischen Erscheinungsbild der Oberflächen bedingt durch die Behandlung, die das Material vor bzw. während der Montage auf der Baustelle erfährt. Bei patinierten Kupferplatten kommt dazu, dass beim Transport und Umpacken der Kupferprodukte Patinaabrieb entsteht und Patinastaub aufgewirbelt wird, der bei der Verarbeitung der Kupferprodukte zu gesundheitlichen Beeinträchtigungen und zu agressivem Angriff verwendeter Werkzeuge führen kann. Während unbeschichtete Kupferprodukte im Bereich der Dach- und Fassadenbekleidung sowie Dachentwässerung häufig durch Folien gegen Beschädigungen geschützt ausgeliefert werden können, bietet sich diese Lösung für patinierte Oberflächen nicht an. Der Grund ist darin zu sehen, dass der lose auf den Kupferprodukten befindliche Patinastaub eine ausreichende Haftung der Folie verhindert. Bei Verwendung eines Klebers zur Fixierung der Folie würde es je nach Art und Auftragungsmenge des Klebers zu einer Wechselwirkung mit der Patinaschicht kommen, was zu unerwünschten Verfärbungen führen kann. Eine Lackierung zum Schutz der Patina ist allerdings auch ausgeschlosssen, da in diesem Fall die gewünschte Bewitterung der Kupferprodukte unterbrochen werden würde.

Aus der EP 0 769 569 A2 ist ein Verfahren zur Stabilisierung einer auf einem Kupferblech erzeugt und künstlichen Patinaschicht bekannt, wobei unmittelbar nach Erzeugung der Patinaschicht hierauf eine aus Wasserglas und Hydroxylzellulose bestehende transparente Abdeckschicht aufgebracht wird. Die Abdeckschicht kann aus Natrium- oder Kaliumwasserglas und Hydroxylzellulose bestehen und wird entweder durch Tauchen oder durch Sprühen auf ein künstlich patiniertes Kupferblech aufgebracht. Eine derartige Abdeckschicht soll den Charakter haben eines Netzes mit der Wirkung, dass auf der einen Seite die Abdeckschicht ausreichend porös ist, um den Reifeprozess der Patina in der erforderlichen Weise ablaufen zu lassen. Andererseits soll die netzartige transparente Abdeckschicht auch nach längerer Zeit ihre Form beibehalten und nicht reißen.

Auch aus der WO 95/29207 A ist es bekannt, eine künstliche Patinabeschichtung durch eine zusätzliche Deckschicht zu schützen. Ähnliche Vorschläge lassen sich der JP 54 076 447 A, der DE 195 30 836 C1 sowie der GB 1 380 096 A entnehmen.

Der Erfindung liegt die Aufgabe zugrunde, ein Verfahren zum Schutz von patinierten Oberflächen von Kupferprodukten aufzuzeigen, welches die Entstehung von Patinastaub beim Transport und Umpacken der patinierten Kupferprodukte verhindert, aber gleichzeitig sicher stellt, dass die Bewitterbarkeit nicht dauerhaft unterbunden wird. Darüber hinaus soll ein entsprechendes Kupferprodukt mit diesen Eigenschaften aufgezeigt werden.

Diese Aufgabe wird bei einem Verfahren mit den Merkmalen des Patentanspruchs 1 erfüllt. Ein Kupferprodukt, das diese Anforderungen erfüllt, ist Gegenstand des Patentanspruchs 4.

Vorteilhafte Weiterbildungen des Erfindungsgedankens sind Gegenstand der Unteransprüche.

Bei dem erfindungsgemäßen Verfahren zum Schutz von patinierten Oberflächen von Kupferprodukten, insbesondere von Kupfertafeln, ist vorgesehen, dass eine wässrige Polymerdispersion auf die patinierte Oberfläche appliziert wird. Diese Polymerdispersion dringt dabei in die oberflächennahen Bereiche der porösen Patina ein und führt nach dem Trocknen dazu, dass oberflächennahe Hohlräume bzw. Poren mit einer organischen Masse verfestigt sind. Das heißt, die Polymerdispersion bildet zusammen mit der Patina einen wasserdiffusionsdurchlässigen Verbund.

Durch dieses Verfahren werden lose Patinastäube gebunden. Gleichzeitig wird die Abriebfestigkeit der Patina verbessert, so dass sich keine neuen Stäube bilden. Die derart werksseitig behandelten patinierten Kupferprodukte können während der Verpackung und des Transports wesentlich einfacher gehandhabt werden. Gesundheitliche Beeinträchtigungen durch Patinastaub werden ebenso vermieden wie korrosive Angriffe von Werkzeugen.

Die organische Beschichtung in Form der wässrigen Polymerdispersion führt darüber hinaus aber auch zu einer vereinfachten Handhabbarkeit bei der Weiterverarbeitung sowie zu geringeren Abplatzungen der Patina beim Biegen oder Strecken der Kupferprodukte. Insbesondere in abgekanteten Bereichen des Kupferproduktes können Abplatzungen deutlich reduziert werden.

Bei der wässrigen Polymerdispersion handelt es sich um eine schwach wassergefährdende Flüssigkeit der Wassergefährdungsklasse 1. Die wässrige Polymerdispersion ist in ihrer Viskosität so eingestellt, dass sie komplett von der porösen Patinaschicht aufgesaugt wird. Dadurch bekommt die Patina selbst einen gegenüber der unbeschichteten Patina veränderten Aufbau, zumindest in oberflächennahen Bereichen.

Im Rahmen der Erfindung werden unter Kupferprodukten Kupfer- und Kupferlegierungshalbzeuge verstanden, auf denen sich eine Patina aus Kupfersalzen bildet, wie sie auch im Laufe der natürlichen Bewitterung entstehen.

Es wird als vorteilhaft angesehen, wenn die Polymerdispersion in Tropfenform auf die patinierte Oberfläche aufgebracht wird. Bevorzugt wird die Polymerdispersion fein vernebelt und so aufgebracht, dass einzelne Tröpfchen von der Patinaschicht aufgesaugt werden, ohne dass sich eine komplett geschlossene Deckschicht wie bei einem Lack bilden kann. Die derart aufgetragene und insbesondere aufgespritzte Menge wird mit 5 g/m² bis 10 g/m² so gering gehalten, dass nicht alle Hohlräume bzw. Poren der schwammartig aufgebauten Patina mit der wässrigen Polymerdispersion ausgefüllt werden, sondern nur die oberflächennahen Hohlräume.

Würde man die vorgesehene Menge auf eine glatte, das heißt nicht offenporige Oberfläche auftragen, ergäbe sich nach dem Trocknen eine geschlossene Schicht mit einer Dicke von ca. 5 µm. Übliche Lacke haben nach dem Auftragen und Trocknen vergleichsweise hohe Schichtdicken von 80 µm bis 150 µm. Es ist zudem vorgesehen, dass die wässrige Polymerdispersion nur einen sehr geringen Feststoffanteil von ca. 15 % bis 20 % hat. Im Vergleich dazu besitzen Lacke häufig Feststoffanteile von bis zu 50 %. Dieser geringe Feststoffanteil hat den Vorteil, dass die Polymerdispersion ähnlich dünnflüssig wie Wasser ist und daher problemlos in die Patina diffundiert. Der hohe Wasseranteil der Polymerdispersion wird beim Trocknen umweltfreundlich verdampft, was insbesondere mit Hilfe von Infrarotstrahlung sehr effizient möglich ist. Der verbleibende Feststoffanteil legt sich nach dem Trocknen nur auf die Wände der Hohlräume, füllt diese aber nicht komplett aus. Dadurch bleibt die Offenporigkeit der patinierten Kupferprodukte erhalten.

Ein wesentlicher Vorteil des erfindungsgemäßen Verfahrens besteht darin, dass sich die derart behandelte Patinaschicht optisch kaum von einer natürlichen Patinaoberfläche unterscheidet, sich aber wesentlich besser verarbeiten und handhaben lässt. Die wasserdampfdurchlässige Polymerbeschichtung, vorzugsweise auf Acrylatbasis, wittert je nach Einbaulage und Beanspruchung der Kupferprodukte mit der Zeit ab, ohne Spuren oder Verfärbungen zu hinterlassen. Es handelt sich daher um einen temporären Schutz. Im Unterschied zu Schutzfolien, die bislang beim Transport zum Einsatz gekommen sind, entsteht vor Ort auch kein Müll.

Die organische Beschichtung ist einerseits hydrophob, gestattet aber andererseits den nötigen Zutritt von Luftfeuchtigkeit und Wasser in die Patinaschicht, so dass sich die Patinaoberfläche im Laufe der Bewitterung weiterhin wie bekannt verändern kann.

Überraschenderweise wurde festgestellt, dass sich Farbangleichungen im Laufe der Bewitterung schneller vollziehen als bei unbeschichteten patinierten Oberflächen von Kupferprodukten.

Es hat sich allerdings gezeigt, dass die nach dem erfindungsgemäßen Verfahren behandelten patinierten Oberflächen ein verändertes Benetzungsverhalten aufweisen. Während unbehandelte Oberflächen bei der Benetzung mit Wasser sofort Feuchtigkeit aufnehmen und sich dunkel verfärben, perlt das Wasser von den behandelten Oberflächen zunächst ab. Erst bei längerer Benetzung mit Wasser verfärben sich auch die behandelten Kupferprodukte ebenfalls dunkel. Die durch die Polymerdispersion aufgebrachte Schutzschicht ist transparent, weist allerdings ein geringfügig andersartiges Reflexionsverhalten auf als eine unbeschichtete Patinaoberfläche, so dass bei seitlichem Einfall ein leicht matter Glanz erkennbar ist.

Das erfindungsgemäße Verfahren kommt vorzugsweise im Zusammenhang mit bekannten Patinierungsverfahren zum Einsatz. Üblicherweise erfolgt bei einer Patinierung zunächst ein Schleifen der Oberfläche der Kupferprodukte, anschließend ein Beschichten mit einer Patinierchemikalie. Darauf folgt eine Klimakammerauslagerung und eine Bewitterung im Reifelager. Nach Erreichen einer vorgegebenen Patinagüte kann nunmehr das erfindungsgemäße Verfahren durchgeführt werden, das heißt das Beschichten der Oberfläche mit einer temporären Schutzschicht in Form der wässrigen Polymerdispersion und das anschließende Trocknen der Polymerdispersion. Schließlich können die fertigen Kupferprodukte eine Qualitätsprüfung passieren und der Fertigverpackung zugeführt werden.

## Patentansprüche

1. Verfahren zum Schutz von patinierten Oberflächen von Kupferprodukten, bei welchem eine wässrige Polymerdispersion auf die patinierte Oberfläche appliziert wird, so dass die Polymerdispersion in oberflächennahe Bereiche der porösen Patina eindringt und bei welchem die wässrige Polymerdispersion anschließend getrocknet wird, wobei die Polymerdispersion mit der Patina einen wasserdampfdiffusionsdurchlässigen Verbund bildet, **dadurch gekennzeichnet, dass** eine Menge von 5 g/m² bis 10 g/m² der wässrigen Polymerdispersion auf die patinierte Oberfläche aufgetragen wird, so dass sich keine komplett geschlossene Deckschicht ausbilden kann und wobei der Feststoffanteil der wässrigen Polymerdispersion zwischen 15 % und 20 % liegt.

2. Verfahren nach Anspruch 1, **dadurch gekennzeichnet, dass** die wässrige Polymerdispersion in Tropfenform auf die patinierte Oberfläche aufgebracht wird.

3. Verfahren nach Anspruch 1 oder 2, **dadurch gekennzeichnet, dass** der Wassertanteil der aufgetragenen Polymerdispersion mit Hilfe von Infrarotstrahlung verdampft wird.

4. Kupferprodukt mit einer patinierten Oberfläche, **dadurch gekennzeichnet, dass** oberflächennahe Bereiche der porösen Patina mit einer wässrigen Polymerdispersion verfestigt sind, welche mit der Patina einen wasserdampfdiffusionsdurchlässigen Verbund bildet, **dadurch gekennzeichnet, dass** der Feststoffanteil der Polymerdispersion zwischen 15 % und 25 % liegt und eine Menge von 5 g/m² bis 10 g/m² der wässrigen Polymerdispersion auf die patinierte Oberfläche aufgetragen ist, so dass sich keine komplett geschlossene Deckschicht ausbilden kann.

5. Kupferprodukt mit einer patinierten Oberfläche nach Anspruch 4, **dadurch gekennzeichnet, dass** auf die Patina eine gegenüber der Patina optisch neutrale, wässrige Polymerdispersion aufgetragen ist.

6. Kupferprodukt nach Anspruch 4 oder 5, **dadurch gekennzeichnet, dass** die wässrige Polymerdispersion auf Acrylatbasis hergestellt ist.

## Claims

1. Method for protecting patinated surfaces of copper products, in which an aqueous polymer dispersion is applied to the patinated surface, so the polymer dispersion penetrates regions of the porous patina close to the surface and in which the aqueous polymer dispersion is then dried, the polymer dispersion forming, with the patina, a composite which is permeable to water vapour diffusion, **characterised in that** a quantity of 5 g/m² to 10 g/m² of the aqueous polymer dispersion is applied to the patinated surface, so no completely closed cover layer can form and wherein the solid material fraction of the aqueous polymer dispersion is between 15 % and 20 %.

2. Method according to claim 1, **characterised in that** the aqueous polymer dispersion is applied to the patinated surface in drop form.

3. Method according to claim 1 or 2, **characterised in that** the water fraction of the applied polymer dispersion is evaporated with the aid of infrared radiation.

4. Copper product with a patinated surface, **characterised in that** regions of the porous patina close to the surface are reinforced with an aqueous polymer dispersion, which, with the patina, forms a composite which is permeable to water vapour diffusion, **characterised in that** the solid material fraction of the polymer dispersion is between 15 % and 25 % and a quantity of 5 g/m² to 10 g/m² of the aqueous polymer dispersion is applied to the patinated surface, so no completely closed cover layer can form.

5. Copper product with a patinated surface according to claim 4, **characterised in that** an aqueous polymer dispersion which is visually neutral compared to the patina is applied to the patina.

6. Copper product according to claim 4 or 5, **characterised in that** the aqueous polymer dispersion is produced based on acrylate.

## Revendications

1. Procédé de protection de surfaces patinées de produits en cuivre selon lequel,
- on applique une dispersion aqueuse de polymères sur la surface patinée pour que la dispersion de polymères pénètre dans les zones poreuses de la patine, au voisinage de la surface, et
- ensuite on sèche la dispersion aqueuse de polymères,
* la dispersion de polymères formant ainsi une combinaison perméable à la diffusion de vapeur d'eau,
**caractérisé en ce qu'**
on applique une quantité de 5 g/m² - 10 g/m² de la dispersion aqueuse de polymères sur la surface patinée pour développer une couche de couverture complètement fermée, et
la teneur en matières solides de la dispersion aqueuse de polymères représente entre 15 % et 20 %.

2. Procédé selon la revendication 1,
**caractérisé en ce que**
la dispersion aqueuse de polymères est appliquée sous la forme de gouttes sur la surface patinée.

3. Procédé selon la revendication 1 ou 2,
**caractérisé en ce que**
la teneur en eau de la dispersion de polymères, ainsi appliquée, est évaporée avec un rayonnement infrarouge.

4. Produit en cuivre ayant une surface patinée,
**caractérisé en ce que**
les zones de la patine poreuse proches de la surface, sont renforcées par une dispersion aqueuse de polymères formant une combinaison perméable à la diffusion de la vapeur d'eau, avec la patine,
**caractérisé en ce que**
la teneur en matières solides de la dispersion de polymères se situe entre 15 % et 25 % et une quantité comprise entre 5 g/m² et 10 g/m² de la dispersion aqueuse de polymères est appliquée sur la surface patinée pour développer une couche de couverture complètement fermée.

5. Produit en cuivre ayant une surface patinée selon la revendication 4,
**caractérisé en ce qu'**
on applique sur la patine, une dispersion aqueuse de polymères optiquement neutre vis-à-vis de la patine.

6. Produit en cuivre ayant une surface patinée selon la revendication 4 ou 5,
**caractérisé en ce que**
la dispersion aqueuse de polymères est à base d'acrylate.
